Europäisches Patentamt

European Patent Office

Office européen des brevets

(11) Publication number: **0 212 006**
**B1**

## (12) EUROPEAN PATENT SPECIFICATION

(45) Date of publication of patent specification: **12.07.89**

(51) Int. Cl.⁴: **B 23 G 3/08**

(21) Application number: **85116562.1**

(22) Date of filing: **24.12.85**

(54) **Device for threading holes in pressing operations.**

(30) Priority: **02.08.85 IT 2273085 u**

(43) Date of publication of application:
**04.03.87 Bulletin 87/10**

(45) Publication of the grant of the patent:
**12.07.89 Bulletin 89/28**

(84) Designated Contracting States:
**CH DE FR LI**

(56) References cited:
**DE-A-2 638 626**
**FR-A-2 495 979**
**US-A-3 162 873**

(73) Proprietor: **MECLOSTAMPI di A. Canobbio & C. s.a.s.**
**Via della Fametta Strada A/N. 1**
**I-22074 Lomazzo (Como) (IT)**

(72) Inventor: **Canobbio, Antonio**
**Via Del Seprio 33**
**I-22074 Lomazzzo (Como) (IT)**

(74) Representative: **Arena, Giovanni**
**Viale Certosa 135**
**I-20151 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 212 006 B1

## Description

The present invention relates to a device to be used during the pressing operations for threading metallic pieces obtained by way of this process.

In fact the working through the pressing of metallic pieces often requires to obtain the thread of the holes previously made therein.

Such a thread is carried out by known mechanical units consisting of an upper part to be fixed to the slider of the press which is also fixed to the punch, and of a lower part to be fixed to the base of the press itself.

The aforesaid upper part comprises a mandrel with vertical axes whose lower end is fixed to a tap arranged for threading the pre-made holes. The same part also comprises a chain transmission system which, by way of a rack rod fixed to the lower part of the device, translates the alternate motion of the slider of the press into a rotary motion of the threading tap, so as to allow the slider to perform at each stroke a thread in the pre-made hole of the metallic piece under pressing.

However, such mechanical devices present various drawbacks: slow working speed allowed, need for frequent adjustment and maintenance operation (due to the tendency of the chain to get loose), frequent breaks of the threading tap (due, among other things, to the unavoidable slacks of the chain during the motion transmission).

The threading device according to the present solution aims to overcome the above mentioned drawbacks.

It is mainly characterized by the fact that the transmission system of the motion to the mandrel is a gear assembly and that the rack rod is coupled with the lower part by way of a joint adapted to allow, in axial direction, small elastic shifting of the rod around one of its balance positions.

The features of our solution will be better detailed in the following description and with reference to the accompanying drawings of a non-limiting embodiment in which:

— Figure 1 shows a side view of the threading device with a cutaway view of the upper part,

— Figure 2 shows a horizontal section of the transfer case 11 of Figure 1,

— Figure 3 shows a side view of the rack rod and of the relating elastic joint with a cutaway view of the lower part.

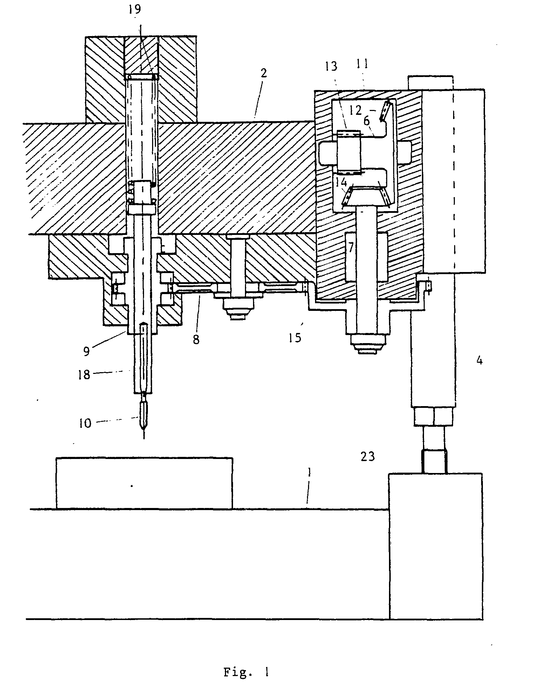

Figure 1 illustrates the lower part 1 of the device (to be fixed to the base of the press), the upper part 2 (to be fixed to the slider), the rack rod 4 fixed to the lower part by way of joint 23, the transmission system being adapted to comprise the transfer pinions 6 and 7 (which respectively carry gears 12, 13 and 14, 15), gear 8, mandrel 9 and the threading tap 10 fixed thereto.

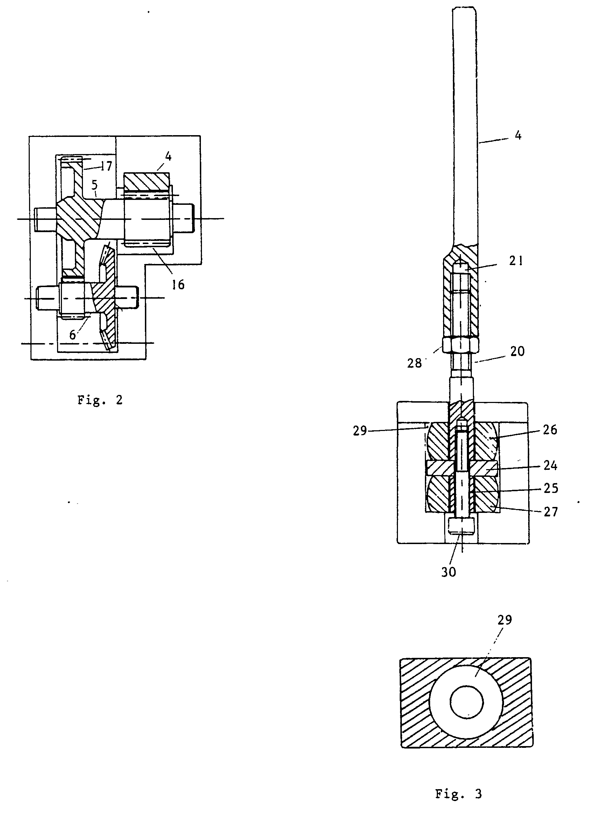

Figure 2 illustrates the transfer case 11 of Figure 1, sectioned according to a ground plane across the axes of pinion 6.

This section displays the presence in the transmission system of another transfer pinion, pinion 5 carrying gears 16 and 17 and located between rod 4 and pinion 6.

When the slider of the press moves, the rack rod 4, whose teeth engage with those of gear 16, slides in the transfer case 11. Thus, the movement is transmitted through the gears to the mandrel which will therefore turn clockwise during the downward motion of the slider and ACW during the upward motion.

In Figure 1 support 18 fixed to the threading tap is a square-sectioned slide which can slide in a similarly shaped hollow of the mandrel. Spring 19 is destined to make a pressure directed towards the low side of slide 18 so that, when during the downward motion the tap gets in touch with the piece to be threaded, it does not rigidly follow the downward motion of the press slider any longer, but engages itself into the piece and feeds for each revolution of a depth equal to the lead of the thread to be made.

Figure 3 is a side view (partially in section) of the rack rod and of its joint coupling to the lower part of the device. In this figure the upper portion represents the geared part. It extends downwards by way of the threaded pin 20 which engages in the upper side into hollow 21 of the rod and may be screwed therein according to a changeable length and then blocked with nut 28 so as to allow an adjustment of the whole length of the rack rod.

In the lower side the pin inserts slidely into the cylindrical hollow 29 present in joint 23. Figure 3 also illustrates the presence in joint 23 of a metallic disk 24 located on the lower end of pin 20, of a bush 25 and of two rings 26 and 27 of elastic material, one of which is located on the lower part of pin 20, and the other on bush 25.

Besides being the seat of the ring, bush 25 is also adapted to fix disk 24 onto the lower head of the pin by way of screw 30. The elastic rings 26 and 27 are so sized as to exert, in rest conditions, some pressure against the bottom and the top cover of the cylindrical hollow 21.

Moreover, the said bottom and cover provide two holes where the head of screw 30 and respectively the pin 20 may slide, so as to allow shiftings of the rack rod according to its vertical axes.

Such shiftings result (with respect to the balance position indicated in Figure 3) of elastic sort due to the presence of rings 26 and 27.

The utility of the elastic joint is particularly remarkable at the end of the upward and downward strokes of the slider of the press, when the joint causes a cushion to the sudden change in the motion of the mandrel. It may be easily understood that this feature together with the lesser slacks introduced by the gear transmission system in comparison with the chain system, can provide the previously mentioned advantages consisting in the higher working speed and in the less frequent maintenance requested on the transmission system and on the threading tap.

## Claims

1. A device for threading holes in pressing operations, comprising an upper part (2) to be fixed to the slider of the press and a lower part (1) to be fixed to its base wherein the lower part is equipped with a rack rod (4) and the upper part is equipped with a mandrel (9) having a threading tap (10), as well as a transmission system adapted to translate, by way of the said rack rod (4), the alternate motion of the slider of the press into a rotary motion of the mandrel (9), characterized by the fact that the transmission system for the rotation of the mandrel is a gear device and that the rack rod (4) is coupled to the lower part (1) via a joint (23) adapted to allow, in axial direction, elastic shiftings of the rod around a balance position.

2. A device as claimed in claim 1, characterized by the fact that the track rod (4) is equipped with a device adjusting its length being formed by an upper part and a lower part (20), which are separable from one another, and are coupled via a screw coupling having various locking positions.

3. A device as claimed in claim 2, characterized by the fact that:
— the joint comprises a cylindrical hollow (29) equipped with two holes, one in the centre of its base, and one in the centre of its top cover;
— the lower part of the rack rod has at its lower end a segment, which is inserted in a shifting manner into the said cylindrical hollow (29) through the said holes;
— the said hollow comprises two rings of elastic material located on the said segment of the rack rod and separated from each other by a metallic disk fixed to the segment itself.

## Patentansprüche

1. Vorrichtung zum Bohren von Gewindelöchern bei Preßvorgängen, mit einem an dem Gleitstück der Presse zu befestigenden oberen Teil (2) und einem an deren Basisteil zu befestigenden unteren Teil (1), wobei das untere Teil eine Zahnstange (4) und das obere Teil eine mit einem Gewindebohrer (10) versehene Spindel (9) aufweist, und mit einem Getriebesystem, mit dem mit Hilfe der Zahnstange (4) die Hin- und Herbewegung des Gleitstücks der Presse in eine Drehbewegung der Spindel (9) umsetzbar ist, dadurch gekennzeichnet, daß das Getriebesystem für die Spindeldrehung eine Zahnradeinrichtung ist, und daß die Zahnstange (4) mit dem unteren Teil (1) über eine Verbindungsstelle (23) gekuppelt ist, die in axialer Richtung elastische Verschiebungen der Stange um eine Gleichgewichtsposition zuläßt.

2. Vorrichtung nach Anspruch 1, dadurch gekennzeichnet, daß die Gewindestange (4) eine Einrichtung zum Justieren ihrer Länge aufweist, die aus einem oberen Teil und einem unteren Teil (20) gebildet ist, welche voneinander trennbar und durch eine Verschraubung mit verschiedenen Verriegelungsstellungen miteinander verbunden sind.

3. Vorrichtung nach Anspruch 2, dadurch gekennzeichnet, daß
— die Verbindungsstelle eine zylindrische Höhlung (29) aufweist, die mit zwei Löchern versehen ist, von denen sich das eine in der Mitte ihres Bodenteils und das andere sich in der Mitte ihres oberen Abdeckteils befindet;
— der untere Teil der Zahnstange an ihrem unterem Ende einen Abschnitt hat, der durch die genannten Löcher verschiebbar in die zylindrische Höhlung (29) eingesetzt ist;
— die Höhlung zwei Ringe aus elastischem Material hat, die auf dem genannten Abschnitt der Zahnstange angeordnet und voneinander durch eine an dem Abschnitt selbst befestigte Metallscheibe getrennt sind.

## Revendications

1. Dispositif pour tarauder des trous lors d'opérations effectuées à la presse, comprenant une partie supérieure (2) devant être fixée au coulisseau de la presse et une partie inférieure (1) devant être fixée à son embase, la partie inférieure étant munie d'une barre à crémaillère (4) et la partie supérieure étant munie d'un mandrin (9) portant un taraud (10), ainsi qu'un système de transmission conçu pour transformer, au moyen de ladite crémaillère (4), le mouvement alternatif du coulisseau de la presse en un mouvement de rotation du mandrin (9), caractérisé par le fait que le système de transmission pour la rotation du mandrin est un dispositif à engrenage et en ce que la barre à crémaillère (4) est accouplée à la partie inférieure (1) par l'intermédiaire d'un joint (23) conçu pour permettre, dans une direction axiale, des déplacements élastiques de la barre par rapport à une position d'équilibre.

2. Dispositif selon la revendication 1, caractérisé par le fait que la barre à crémaillère (4) est munie d'un dispositif réglant sa longueur, formé d'une partie supérieure et d'une partie inférieure (20) qui peuvent être séparées l'une de l'autre et qui sont accouplées par l'intermédiaire d'un accouplement à vis ayant diverses positions de blocage.

3. Dispositif selon la revendication 2, caractérisé par le fait que:
— le joint comprend un évidement cylindrique (29) présentant deux trous, l'un dans le centre de sa base et l'autre dans le centre de son couvercle supérieur;
— la partie inférieure de la barre à crémaillère comporte, à son extrémité inférieure, un segment qui est inséré de manière mobile dans ledit évidement cylindrique (29) à travers lesdits trous;
— ledit évidement comprend deux bagues de matière élastique disposées sur ledit segment de la barre à crémaillère et séparées l'une de l'autre par un disque métallique fixé au segment lui-même.

Fig. 1

Fig. 2

Fig. 3